(19) Europäisches Patentamt / European Patent Office / Office européen des brevets

(11) **EP 2 209 660 B1**

(12) **FASCICULE DE BREVET EUROPEEN**

(45) Date de publication et mention de la délivrance du brevet:
**10.10.2012 Bulletin 2012/41**

(51) Int Cl.:
**B60K 6/448** *(2007.10)* **B60K 6/387** *(2007.10)*
**F16H 3/72** *(2006.01)* **B60K 6/445** *(2007.10)*

(21) Numéro de dépôt: **08855726.9**

(86) Numéro de dépôt international:
**PCT/FR2008/052012**

(22) Date de dépôt: **07.11.2008**

(87) Numéro de publication internationale:
**WO 2009/068796 (04.06.2009 Gazette 2009/23)**

(54) **DISPOSITIF DE TRANSMISSION DE PUISSANCE ENTRE UNE SORTIE D'UN MOTEUR THERMIQUE ET UN ARBRE DE ROUES ET UTILISATION DE CE DISPOSITIF**

VORRICHTUNG ZUR LEISTUNGSÜBERTRAGUNG ZWISCHEN DEM AUSGANG EINES WÄRMEMOTORS UND EINER RADACHSE SOWIE VERWENDUNG DIESER VORRICHTUNG

DEVICE FOR TRANSMITTING POWER BETWEEN THE OUTPUT OF A THERMAL ENGINE AND A WHEEL SHAFT, AND USE OF SAID DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **07.11.2007 FR 0758834**

(43) Date de publication de la demande:
**28.07.2010 Bulletin 2010/30**

(73) Titulaire: **Peugeot Citroën Automobiles SA**
**78140 Vélizy-Villacoublay (FR)**

(72) Inventeurs:
• **BESNARD, Sébastien**
**F-92340 Bourg La Reine (FR)**
• **JUNCA, Carlos**
**F-75015 Paris (FR)**
• **RENAULT, Aurélien**
**F-78990 Elancourt (FR)**
• **ROBART, Nicolas**
**F-92130 Issy Les Moulineaux (FR)**

(56) Documents cités:
EP-A- 1 026 023 EP-A- 1 092 581
EP-A- 1 092 583 FR-A- 2 832 357
FR-A- 2 834 248 FR-A- 2 834 938
FR-A- 2 883 515 US-A- 6 159 127

**Description**

. La présente invention concerne un dispositif de transmission de puissance entre une sortie d'un moteur thermique et un arbre de roues, ainsi que l'utilisation de ce dispositif. L'invention a notamment pour but de limiter l'encombrement et le coût d'un tel dispositif. L'invention trouve une application particulièrement avantageuse, mais non exclusive, dans le domaine des véhicules automobiles hybrides à dérivation de puissance.

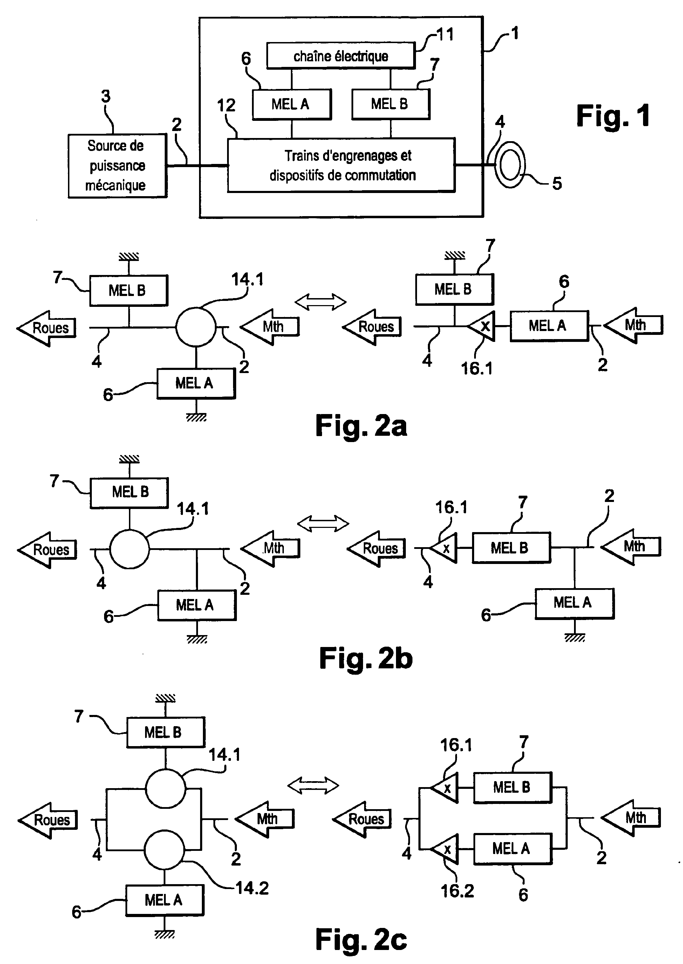

. Comme représenté à la figure 1, un dispositif 1 de transmission à dérivation de puissance comporte un arbre d'entrée 2 relié à une source 3 de puissance mécanique (en général un moteur thermique) et un arbre de sortie 4 relié aux roues 5 du véhicule. Ce dispositif 1 comporte deux machines électriques 6, 7 reliées entre elles par une chaîne électrique 11, et un ensemble mécanique 12 assurant la liaison entre la source 3 de puissance, les roues 5 du véhicule, et les deux machines électriques 6, 7.

. La puissance de la source 3 est soit transmise aux roues 5, soit dérivée vers les machines électriques 6, 7 susceptibles de se comporter en moteur ou en générateur selon des valeurs d'énergies reçues électriquement et/ou mécaniquement respectivement sur leurs bornes et leur arbre. La puissance dérivée est retransmise aux roues 5 du véhicule ou stockée, le cas échéant, dans une batterie connectée à la chaîne électrique.

. Cette puissance dérivée permet d'adapter précisément le couple appliqué aux roues 5 du véhicule à celui demandé par un conducteur, tout en adaptant également précisément les couple et régime du moteur thermique de façon à optimiser son rendement.

. La plupart des dispositifs de transmission proposés, tels que ceux décrits dans les demandes de brevet française FR-A-2832357 et FR-2883515, comprennent un ensemble mécanique 12 formé par un, deux, ou plusieurs trains épicycloïdaux reliés entre eux.

EP 1092 581 montre les caractéristiques du préambule de la revendication 1.

. L'invention se propose de limiter le recours à l'utilisation des trains épicycloïdaux qui sont des éléments mécaniques dont la conception et la réalisation sont complexes.

. A cet effet, l'invention consiste à remplacer les machines dont le rotor est connecté au train épicycloïdal et le stator au carter de la transmission, par des machines comportant un rotor et un stator tournants connectés à l'entrée et à la sortie de la transmission.

. Du point de vue fonctionnel, les deux types d'architectures sont identiques. En outre, le dimensionnement fonctionnel des machines électriques pour les transmissions avec et sans train épicycloïdaux est équivalent. Toutefois les démultiplications entre les machines et les arbres d'entrée et de sortie sont de préférence modifiées.

. L'intérêt de l'invention est d'ordre économique, la suppression d'un ou de plusieurs trains épicycloïdaux dans une transmission à dérivation de puissance permettant de réduire sensiblement le coût de fabrication du dispositif de transmission. En outre, en supprimant au moins un train épicycloïdal de l'ensemble mécanique, on limite son encombrement.

. L'invention concerne donc un dispositif de transmission de puissance selon la revendication 1.

. Selon une réalisation, les deux machines électriques étant à stator tournant, l'ensemble mécanique est dépourvu de train épicycloïdal.

. Selon une des réalisations, une des machines étant à stator tournant et l'autre à stator fixe, l'ensemble mécanique comporte uniquement un train épicycloïdal formé par un planétaire, un porte-satellites portant des satellites et une couronne qui engrènent entre eux.

. Selon une réalisation, l'arbre d'entrée est lié directement au porte-satellites et l'arbre de sortie est lié à un arbre intermédiaire via une descente de pont de rapport $\mu$l, cet arbre intermédiaire étant relié à la couronne via un engrenage de rapport $\mu$0.

. Selon une réalisation, l'arbre de la machine à stator fixe est susceptible d'être lié sélectivement à la couronne via un engrenage de rapport r2 ou au planétaire via un engrenage de rapport r3.

. Selon une réalisation, le stator de la machine à stator tournant est lié à l'arbre d'entrée via un engrenage de rapport q2, et le rotor de la machine à stator tournant est relié au planétaire via un engrenage de rapport q1.

. Selon une réalisation, $\mu$0=-0.15 ; u1=-1.65 ; r2=-0.25 ; r3=-0:89 ; q1=-0.26 ; q2=-0.50.

. Selon une réalisation, l'arbre de sortie est lié à un arbre intermédiaire via une descente de pont de rapport $\mu$1, cet arbre intermédiaire étant lui-même lié à l'arbre d'entrée via un engrenage de rapport $\mu$0.

. Selon une réalisation, le rotor de la première machine est lié aux roues via un engrenage de rapport q1, et le stator de cette machine est lié à l'arbre d'entrée via un engrenage de rapport q2.

. Selon une réalisation, le rotor de la deuxième machine est susceptible d'être lié sélectivement à l'arbre de sortie via un engrenage de rapport r2 ou via un engrenage de rapport q3, respectivement au moyen d'un premier crabot et d'un deuxième crabot, le stator de cette deuxième machine étant susceptible d'être lié sélectivement à l'arbre d'entrée via un engrenage de rapport q4 ou au bâti fixe respectivement au moyen d'un troisième crabot et d'un quatrième crabot.

. Selon une réalisation, $\mu$0=-0.15 ; $\mu$1=-1.65; r2=-0.25; r3=-0.89 ; q1=-0.26 ; q2=-0.50 ; q3=0.49 ; q4=0.32.

. L'invention concerne en outre l'utilisation du dispositif selon l'invention, caractérisée en ce que :

- dans un mode de fonctionnement de type sortie couplée, on ferme les premier et quatrième crabots, et on ouvre les deuxième et troisième crabots, et
- dans un mode combiné, on ferme les deuxième et troisième crabots; et on ouvre les premiers et quatrième crabots.

. Selon une mise en oeuvre, pour passer du mode sortie couplé au mode combiné, on désengage le premier crabot tout en conservant le quatrième crabot engagé, on synchronise le régime du rotor de la deuxième machine avec un pignon fou associable au deuxième crabot, puis on engage ce deuxième crabot, on désengage le quatrième crabot, on synchronise le régime du stator de la machine avec le pignon associable au crabot et on engage le crabot avec ce pignon.

. Selon une mise en oeuvre, pour passer du mode combiné au mode sortie couplée, on désengage le troisième crabot et on arrête le stator de la deuxième machine de manière à engager le quatrième crabot avec le pignon auquel il est associé, et on ouvre le deuxième crabot, on synchronise le rotor de la deuxième machine avec le pignon associable au premier crabot et on engage le premier crabot avec ce pignon.

. L'invention sera mieux comprise à la lecture de la description qui suit et à l'examen des figures qui l'accompagnent. Ces figures sont données à titre illustratif mais nullement limitatif de l'invention. Ces figures montrent :

. Figure 1 (déjà décrite) : une représentation schématique de l'architecture d'un dispositif de transmission à dérivation de puissance ;

. Figures 2 : des schémas cinématiques de dispositifs de transmission monomode selon l'état de la technique et de leur équivalent selon l'invention ;

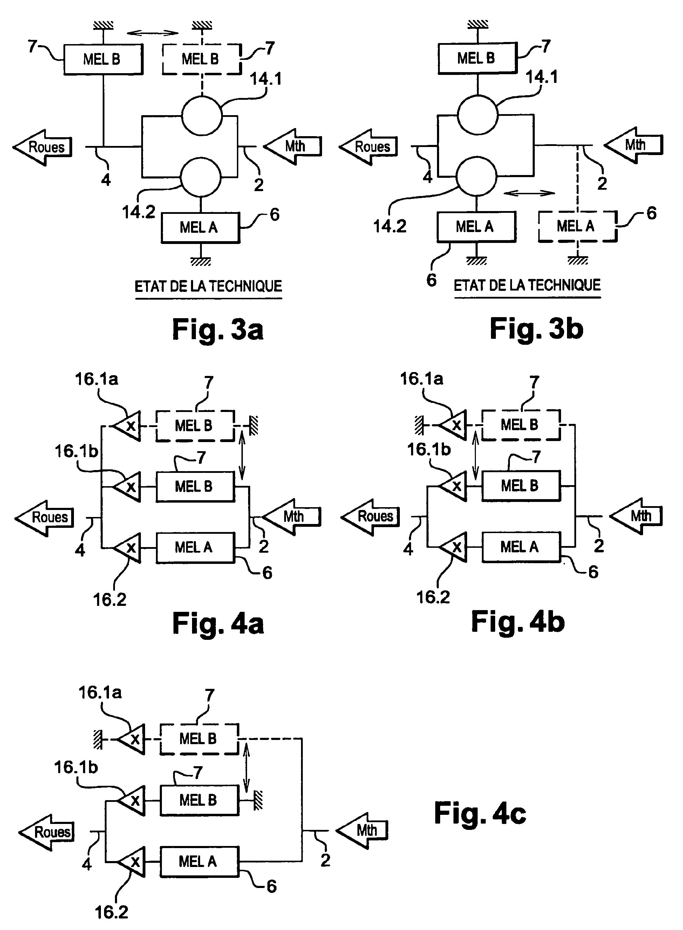

. Figures 3: des schémas cinématiques de dispositifs de transmission multimodes selon l'état de la technique ;

. Figures 4: des schémas cinématiques de transmissions multimodes selon l'invention équivalentes à celles de la figure 3 dépourvues de trains épicycloïdaux ;

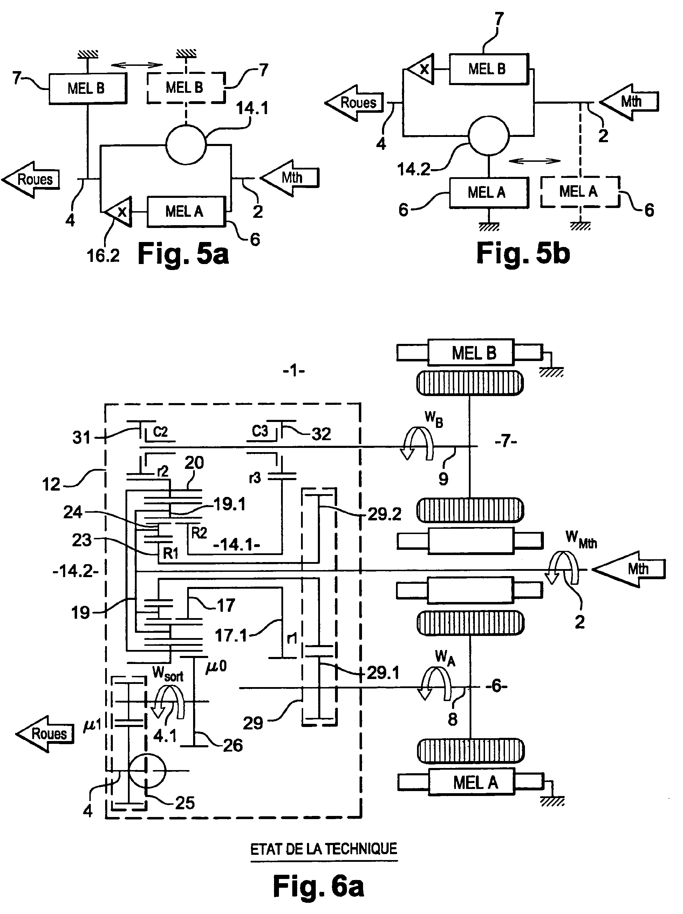

. Figures 5: des schémas cinématiques de transmissions multimodes selon l'invention équivalentes à celles de la figure 3 comprenant un seul train épicycloïdal ;

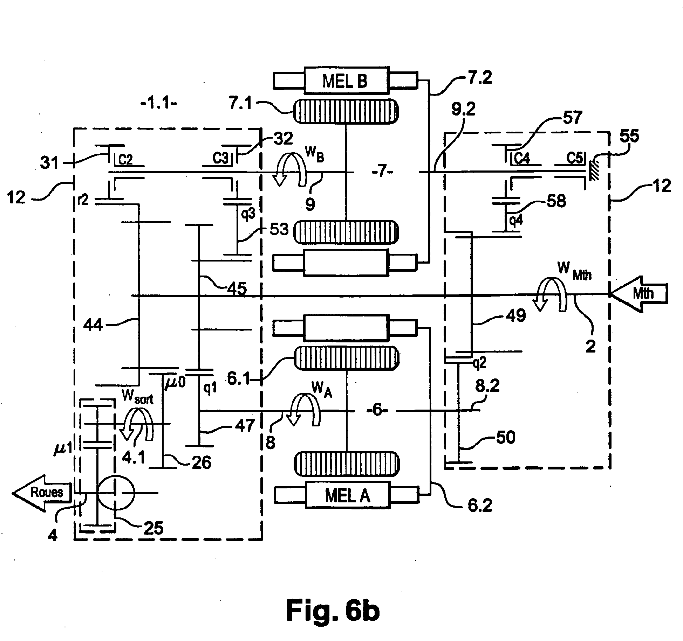

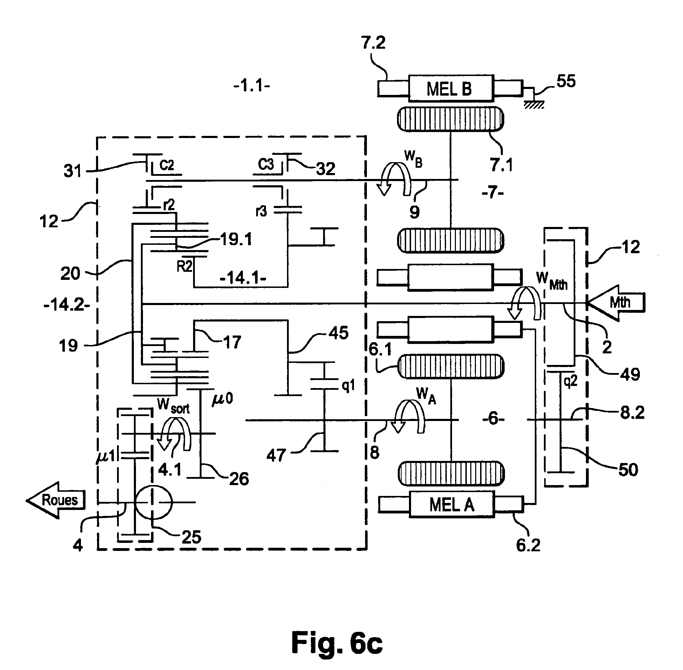

. Figures 6 : des représentations schématiques d'un dispositif de transmission de puissance à trains Ravigneaux et de ses équivalents selon l'invention ;

. Les éléments identiques conservent la même référence d'une figure à l'autre.

. Les figures 2 montrent à gauche des représentations cinématiques de dispositifs de transmission de puissance selon l'état de la technique de type monomode qui présentent une seule configuration possible de transmission, soit un seul mode de fonctionnement.

. A droite, les figures 2 montrent des représentations cinématiques des dispositifs de transmissions selon l'invention équivalentes dans lesquelles les trains épicycloïdaux ont été remplacés par une machine électrique à stator tournant et une démultiplication.

. Plus précisément, la figure 2a montre à gauche une architecture à sortie couplée dans laquelle les arbres des machines électriques 6, 7 (à stator fixe) sont reliés respectivement au train épicycloïdal 14.1 et à l'arbre 4 de sortie. Cette architecture est dite à sortie couplée car le régime de la machine 7 est directement proportionnel au régime de l'arbre de sortie 4.

. Dans le schéma équivalent selon l'invention représenté à droite, l'ensemble formé par la machine électrique 6 à stator fixe et le train épicycloïdal 14.1 a été remplacé par un ensemble formé par une machine électrique 6 et une démultiplication 16.1.

. La figure 2b montre à gauche une architecture classique à entrée couplée dans laquelle les arbres des machines électriques 6 et 7 (à stator fixe) sont reliés respectivement au train épicycloïdal 14.1 et à l'arbre d'entrée 2. Cette architecture est dite à entrée couplée car le régime de la machine 7 est directement proportionnel au régime de l'arbre de sortie 4.

. Dans le schéma équivalent selon l'invention représenté à droite, l'ensemble formé par la machine électrique 6 à stator fixe et le train épicycloïdal 14.1 a été remplacé par un ensemble formé par une machine électrique 6 à stator tournant et une démultiplication 16.1.

. La figure 2c montre à gauche une architecture de type combiné dans laquelle les machines électriques 6 et 7 (à stator fixe) sont reliées à l'arbre d'entrée 2 et à l'arbre de sortie 4 chacune via un train épicycloïdal 14.1, 14.2. Cette architecture est dite de type combiné car le régime des machines 6, 7 dépend des régimes des arbres d'entrée 2 et de sortie 4.

. Dans le schéma équivalent selon l'invention représenté à droite, les machines électriques 6 et 7 à stator fixe et les trains épicycloïdaux 14.1, 14.2 ont été remplacés par des machines électrique 6, 7 à stator tournant et une démultiplication 16.1, 16.2 reliés en parallèle.

. La simplification des architectures monomodes exposées ci-dessus consistant en un remplacement des trains épicycloïdaux par un stator tournant et une démultiplication peut être étendue aux dispositifs de transmission multimodes dans lesquels un arbre de machine est susceptible d'être branché à deux éléments différents de l'ensemble mécanique. De tels systèmes présentent l'intérêt de limiter la puissance dérivée dans la chaîne électrique en permettant à la machine électrique d'être reliée, parmi les deux éléments, à celui qui tourne le moins vite.

. Les figures 3 montrent ainsi des schémas cinématiques de transmissions multimodes selon l'état de la technique, dans lesquelles les deux machines électriques 6, 7 à stator fixe, sont reliées entre elles via deux trains épicycloïdaux 14.1, 14.2. Tandis que les figures 4 montrent des schémas de transmissions selon l'invention équivalentes à celles des figures 3 dans lesquelles les trains épicycloïdaux ont été remplacés par des machines 6, 7 à stator et à rotor et des démultiplications branchées en parallèle.

. Plus précisément, la figure 3a montre un schéma cinématique d'une transmission selon l'état de la technique apte à fonctionner suivant un mode de type sortie couplée et un mode combiné. Dans le mode à sortie couplée, la machine 7, représentée en traits pleins, est connectée directement à l'arbre 4 de sortie, tandis que dans le mode combiné la machine 7, représentée en traits discontinus, est connectée au train épicycloïdal 14.1.

. La figure 4a représente un schéma cinématique d'une transmission selon l'invention, équivalente, dans laquelle les trains épicycloïdaux 14.1, 14.2 ont été remplacés par deux machines 6, 7 à rotor et à stator tournants et des démultiplications 16.1, 16.2. Dans le mode à sortie couplée, le stator de la machine 7, représentée en traits discontinus, est relié au carter, une démultiplication 16.1a étant reliée en sortie de la machine 7. Dans le mode combiné, le stator de la machine 7, représentée en traits pleins, est relié à l'arbre d'entrée 2, une démultiplication 16.1 b (différente de 16.1a) étant reliée en sortie de la machine 7. Un dispositif de commutation monté sur l'arbre de la machine 7 assure la commutation d'un mode à l'autre.

. La figure 3b montre un schéma cinématique d'une transmission selon l'état de la technique fonctionnant selon un mode de type entrée couplée et un mode combiné. Dans le mode à entrée couplée, la machine 6 représentée en traits discontinus, est connectée directement à l'arbre 2 d'entrée. Dans le mode combiné, la machine 6 représentée en traits pleins, est connectée au train épicycloïdal 14.2.

. La figure 4b montre un schéma cinématique d'une transmission selon l'invention, équivalente, dans laquelle les trains épicycloïdaux 14.1, 14.2 ont été remplacés par deux machines 6, 7 à rotor et à stator tournants et des démultiplications 16.1, 16.2. Dans le mode à entrée couplée, le stator de la machine 7, représentée en traits discontinus, est relié au carter, une démultiplication 16.1a étant reliée en sortie de la machine 7. Dans le mode combiné, le stator de la machine 7, représentée en traits pleins, est relié à l'arbre 4 de sortie, une démultiplication 16.1b (différente de 16.1a) étant reliée en sortie de la machine 7. Un dispositif de commutation monté sur l'arbre la machine 7 assure la commutation d'un mode à l'autre.

. La figure 4c montre un schéma cinématique d'une transmission selon l'invention à entrée et à sortie couplée. Dans le mode à entrée couplée, le stator et le rotor de la machine 7, représentée en traits discontinus, sont reliés respectivement au carter et à l'arbre 2 d'entrée, une démultiplication 16.1a étant reliée en sortie de la machine 7. Dans le mode à sortie couplée, le stator et le rotor de la machine 7 sont reliés respectivement au carter et à l'arbre 4 de sortie, une démultiplication 16.1b (différente de 16.1a) étant reliée en sortie de la machine 7. Un dispositif de commutation monté sur l'arbre de la machine 7 assure la commutation d'un mode l'autre.

. Toutefois, dans le cas de l'utilisation de deux machines 6, 7 à stator tournant, la synchronisation mécanique des éléments de liaison pour passer d'un mode à l'autre n'est plus assurée au moment des changements de mode d'accouplement, une synchronisation de chacun des arbres étant nécessaire avant de changer de mode.

. Les figures 5 montrent des schémas de transmission selon l'invention équivalentes à celles des Figures 3 permettant de conserver la propriété de synchronisme de la transmission. A cet effet, on remplace le train épicycloïdal lié à la machine à partir de laquelle aucune reconfiguration mécanique n'est effectuée et on conserve le train épicycloïdal lié à la machine assurant le changement de mode.

. La figure 5a montre ainsi un schéma cinématique d'une architecture équivalente à celle de la figure 3a dans laquelle le train épicycloïdal 14.2 lié à la machine 6 n'assurant aucun changement de mode est remplacé par une machine à rotor et à stator tournant et une démultiplication 16.2. Toutefois le train 14.1 lié à la machine 7 assurant le changement de mode est conservé.

. La figure 5b montre un schéma cinématique d'une architecture équivalente à celle de la figure 3b dans laquelle le train 14.2 lié à la machine 6, qui n'est pas reconfigurée, est remplacé par une machine 6 à rotor et à stator tournant. Toutefois, le train 14.1 lié à la machine 7 permettant la synchronisation mécanique lors du changement de mode est conservé.

. La figure 6a montre une représentation schématique d'un dispositif de transmission selon l'état de la technique comportant un train Ravigneaux (résultant de la combinaison de deux trains épicycloïdaux). Les figures 6b et 6c montrent respectivement les transmissions équivalentes selon l'invention sans train Ravigneaux ou avec un seul train épicycloïdal.

. La réalisation sans train Ravigneaux met en oeuvre deux machines électriques à stator et à rotor tournants, tandis que la réalisation avec un seul train épicycloïdal met en oeuvre une machine électrique classique (à stator fixe) et une machine électrique à stator et à rotor tournants.

. Plus précisément, la figure 6a montre une représentation schématique d'un dispositif 1 de transmission classique comprenant un arbre d'entrée 2 destiné à être relié à un moteur 3 thermique et un arbre de sortie 4 destiné à être relié aux roues 5.

. Ce dispositif 1 comporte une première machine 6 électrique et une deuxième machine 7 électriques munies respectivement d'un arbre 8 et d'un arbre 9. Pour plus de simplicité, la chaîne électrique reliant les machines 6 et 7 électriques entre elles n'est pas représentée.

. Les arbres d'entrée et de sortie 2, 4 ainsi que les arbres 8 et 9 sont reliés entre eux via un ensemble 12 mécanique délimité par une ligne fermée discontinue.

. Cet ensemble 12 mécanique comporte un train de type Ravigneaux résultant de la combinaison de deux trains 14.1 et 14.2 épicycloïdaux. Le train 14.1, de raison R2, comporte un planétaire 17, un porte-satellites 19 portant les satellites 19.1 et une couronne 20 qui engrènent mutuellement. Le train 14.2, de raison R1, comporte un planétaire 23 et des satellites 24 portés par le porte-satellites 19. Les satellites 24 engrènent avec le planétaire 23 et les satellites 19.1. Le train 14. 2 est dépourvu de couronne.

. Dans cette réalisation, l'arbre 2 d'entrée est relié au porte-satellites 19 commun aux deux trains. L'arbre 4 de sortie est relié à la couronne 20 par l'intermédiaire d'une descente de pont 25 de rapport $\mu$1 et d'une roue 26. Le rapport de démultiplication entre la couronne et la roue 26 est noté $\mu$0.

. Par ailleurs, l'arbre 8 est relié au planétaire 23 par l'intermédiaire des roues 29.1 et 29. 2 qui forment entre elles un engrenage 29 de rapport de démultiplication r1.

. L'arbre 9 de la machine 7 est susceptible d'être lié sélectivement soit à la couronne 20, soit au premier planétaire 17 via une roue 17.1. A cet effet, le dispositif 1 comporte un crabot C2 associable à un pignon fou 31 et un crabot C3 associable à un pignon fou 32. Les crabots C2, C3 sont entraînés en rotation par l'arbre 9, et sont capables de se déplacer en translation afin d'assurer une liaison angulaire entre l'arbre 9 et le pignon fou 31,32.

. Le pignon fou 31 et la couronne 20 forment un engrenage de rapport de démultiplication r2. Le pignon fou 32 et la roue 17.1 forment un engrenage de rapport de démultiplication r3.

. Dans un premier mode de fonctionnement de type sortie couplée (SC), le crabot C2 entre en coopération avec le pignon 31, tandis que le crabot C3 est désengagé du pignon 32 et ne transmet donc pas de couple mécanique entre les arbres 9 et 4 en regard.

. Dans ce mode SC, les régimes Wa, Wb des machines électriques 6 et 7 d'une part, et les régimes Wsort des roues et Wmth du moteur thermique d'autre part sont liés par les équations suivantes :

$$Wa = -R1 / (\mu0 . r1) . Wsort + (R1+1) / r1 . Wmth \qquad (1)$$

$$Wb = 1 / (\mu0 . r2) . Wsort \qquad (2)$$

. On remarque ainsi que dans le mode SC, le régime Wa de la machine 6 dépend des régimes du moteur thermique Wmth et des roues Wsort. Le régime Wb de la machine 7 est proportionnel au régime Wsort des roues.

. Dans le deuxième mode de fonctionnement de type combiné, le crabot C3 entre en coopération avec le pignon 32. Tandis que le crabot C2 est désengagé du pignon 31 et ne transmet donc pas de couple mécanique.

. Dans ce mode, les régimes Wa, Wb des machines électriques 6, 7 d'une part et les régimes Wsort des roues et Wmth du moteur thermique d'autre part sont liés par les équations suivantes :

$$Wa = -R1 / (\mu0 . r1) . Wsort + (R1+1) / r1 . Wmth \qquad (3)$$

$$Wb = -R2 / (\mu0 . r3) . Wsort + (R2+1) / r3 . Wmth \qquad (4)$$

. On remarque ainsi que dans le mode combiné, les régimes Wa et Wb des machines 6, 7 dépendent des régimes du moteur thermique Wmth et des roues Wsort.

. Dans un exemple R1=-2.07 ; R2=1.81 ; r1=-0.54 ; r2=-0.25 ; r3=-0.89 ; $\mu$0=-0.15 ; $\mu$1=-1.65

. Dans la pratique, le changement de mode est effectué lorsque l'arbre 9 et les pignons 31 et 32 présentent sensiblement la même vitesse de rotation.

. En assemblant les architectures selon l'invention pour réaliser chacun des différents modes de fonctionnement, on obtient un dispositif de transmission 1.1 représenté à figure 6b. Ce dispositif 1.1 dépourvu de trains épicycloïdaux correspond à la réalisation de la figure 4a.

. Le dimensionnement des machines électriques 6, 7 est identique à celui de la transmission de la figure 6a. En outre, les démultiplications $\mu$0, $\mu$1, r2 ainsi que le positionnement des arbres 8, 9 et des crabots C2, C3 sont conservés.

. Plus précisément, le dispositif 1.1 comporte une première machine électrique 6 munie d'un rotor 6.1 et d'un stator 6.2 tournants ainsi qu'une deuxième machine électrique 7 munie d'un rotor 7.1 et d'un stator 7.2 tournants.

. Les arbres 2 et 4 d'entrée ainsi que les arbres des machines électriques 6, 7 sont reliés entre eux par l'intermédiaire d'un ensemble mécanique 12 formé par plusieurs roues dentées simples.

. Plus précisément, l'arbre de sortie 4 est relié à un arbre intermédiaire 4.1 via une descente de pont 25 de rapport $\mu 1$, cet arbre intermédiaire 4.1 étant lui-même relié à l'arbre d'entrée 2 via un engrenage de rapport $\mu 0$ formé par les roues 44 et 26. Les rapports $\mu 0$ et $\mu 1$ sont identiques à ceux de la figure 6a.

. Par ailleurs, l'arbre 8 du rotor de la machine 6 est relié à la roue 45 via une roue 47, le rapport de démultiplication entre ces deux roues étant noté q1. L'arbre 8.2 du stator de la machine 6 est relié à l'arbre 2 d'entrée via un engrenage de rapport q2 formé par les roues 49 et 50.

. L'arbre 9 du rotor de la machine 7 est susceptible d'être lié sélectivement à l'arbre 2 via un engrenage de rapport r2 formé par les roues 31 et 44 ou via un engrenage de rapport q3 formé par les roues 32, 53 et 45. A cet effet le dispositif 1 comporte un crabot C2 associable au pignon fou 31 et un crabot C3 associable au pignon fou 32.

. Par ailleurs, l'arbre 9.2 du stator 7.2 de la machine 7 est susceptible d'être lié sélectivement au carter 55 ou à l'arbre d'entrée 2 via un engrenage de rapport q4 formé par le pignon fou 57 et les roues 49 et 58. A cet effet, le dispositif 1 comporte un crabot C5 associable au bâti 55 et un crabot C4 associable au pignon fou 57.

. En mode SC, les crabots C2 et C5 sont fermés, C3 et C4 ouverts. Les équations en régime Wa, Wb des rotors des machines 6, 7 s'écrivent alors :

$$Wa = 1 / (\mu 0 . q1) . Wsort - 1/ q2 . Wmth \qquad (5)$$

$$Wb = 1 / (\mu 0 . r2) . Wsort \qquad (6)$$

. Dans ce mode, le régime Wa du rotor 6.1 de la machine 6 dépend du régime des arbres d'entrée 2 et de sortie 4 ; et le régime Wb du rotor 7.1 la machine 7 est proportionnel à celui de l'arbre de sortie 4 (des roues du véhicules).

. En mode combiné, les crabots C3 et C4 entrent en coopération respectivement avec les pignons 32, 57 ; et les crabots C2 et C5 sont désengagés respectivement des pignons 31 et 55. Les équations en régime Wa, Wb des rotors des machines 6, 7 s'écrivent alors :

$$Wa = 1 / (\mu 0 . q1) . Wsort - 1 /q2 . Wmth \qquad (7)$$

$$Wb = 1 / (\mu 0 . q3) . Wsort - 1 /q4 . Wmth \qquad (8)$$

. Dans ce mode, les régimes des machines 6, 7 dépendent des régimes des arbres d'entrée 2 et de sortie 4.

. On peut calculer les nouvelles démultiplications q1 à q4 par identification avec les équations (1) à (4) :

$$q1 = -r1 / R1 \qquad (9)$$

$$q2 = -r1 / (R1 + 1) \qquad (10)$$

$$q3 = -r3 / R2 \qquad (11)$$

$$q4 = -r3 / (R2+1) \qquad (12)$$

D'après les valeurs r1, r3, R1, R2 indiquées précédemment, q1=-0.26 ; q2=-0.50 ; q3=0.49 ; q4=0.32.

. Lors de la transition entre les deux modes de fonctionnement de l'architecture de la figure 6, on effectue la synchronisation du rotor et du stator de la machine 7. Cette synchronisation est effectuée par un pilotage approprié du couple électrique de cette machine 7.

. Ainsi pour passer du mode sortie couplé au mode combiné, on peut par exemple désengager le crabot C2 tout en conservant le crabot C5 engagé, de sorte que le rotor de la machine 7 est libre. On synchronise alors le régime du rotor de la machine 7 avec le pignon 32 associé au crabot C3, puis on engage le crabot C3. Ensuite, on désengage le crabot C5, on synchronise le régime du stator de la machine 7 avec le pignon 57 et on engage le crabot C4 avec le pignon 57.

. De manière inverse, pour passer du mode combiné au mode sortie couplée, on peut par exemple désengager le crabot C4 et ralentir le stator 9.2. Une fois le stator 9.2 arrêté, on engage le crabot C5 avec le pignon 55. Puis on ouvre le crabot C3, on synchronise le régime du rotor 7.1 avec le pignon 31 et on engage le crabot C2 avec le pignon 31.

. Il est à noter que le mode sortie couplée observable lors du changement de mode avec C3 et C5 engagés et C2, C4 désengagés pourrait être utilisé indépendamment des autre modes dans des phases de vie particulières du véhicule telles que des décollages (phases dans lesquelles le véhicule passe d'une vitesse nulle à une vitesse non nulle), ou des démarrages en côte.

. Par ailleurs, un autre mode de fonctionnement combiné avec les crabots C2 et C4 engagés et les crabots C3 et C5 désengagés peut être utilisé. Ce mode de fonctionnement peut être mis en oeuvre pour optimiser les points de fonctionnement des machines électriques dans certaines situations de vie, dépendantes de la technologie de machine utilisée ayant une influence sur les zones de meilleur rendement.

. Afin de conserver la propriété de synchronisme mécanique de la machine 7 lors de la transition entre les deux modes, on met en oeuvre la cinématique représentée à la figure 6c dans laquelle la transmission ne comporte qu'un train épicycloïdal simple au lieu du train épicycloïdal double de type Ravigneaux.

. Le dimensionnement des machines électriques 6, 7 est identique à celui de la transmission représentée en figure 6a. Les démultiplications $\mu 0$, $\mu 1$, r2 et r3 ainsi que le positionnement des arbres 2, 4, 8 et 9 et des crabots C2, C3 sont conservés.

. Plus précisément, le dispositif 1.1 comporte une première machine électrique 6 munie d'un rotor 6.1 et d'un stator 6.2 tournants ainsi qu'une deuxième machine électrique 7 à rotor 7.1 tournant et à stator 7.2 fixe.

. Les arbres 2 et 4 d'entrée ainsi que les arbres des machines 6, 7 sont reliés entre eux par l'intermédiaire d'un ensemble mécanique 12 formé par le train épicycloïdal 14.1. Ce train 14. 1, de raison R2, comporte un planétaire 17, un porte-satellites 19 portant les satellites 19.1 et une couronne 20 qui engrènent mutuellement.

. Dans cette réalisation, l'arbre d'entrée 2 est relié au planétaire 19. L'arbre de sortie 4 est relié à un arbre intermédiaire 4.1 via la descente de pont 25 de rapport $\mu 1$. Cet arbre intermédiaire 4.1 est lui-même relié à la couronne 20 via une roue 26. La couronne 20 et la roue 26 présentent entre eux un rapport de démultiplication $\mu 0$. Les rapports $\mu 0$ et $\mu 1$ sont identiques à ceux de la figure 6a.

. Par ailleurs, l'arbre 8 du rotor de la machine 6 est relié au planétaire 17 via un engrenage de rapport q1 formé par les roues 45 et 47. L'arbre 8.2 du stator de la machine 6 est relié à l'arbre 2 d'entrée via un engrenage de rapport q2 formé par les roues 49 et 50.

. L'arbre 9 du rotor de la machine 7 est susceptible d'être lié sélectivement à l'arbre 2 via un engrenage de rapport r2 formé par les roues 31 et 44 ou via un engrenage de rapport q3 formé par les roues 32, 53 et 45. A cet effet, le dispositif 1 comporte un crabot C2 associable au pignon fou 31 et un crabot C3 associable au pignon fou 32.

. L'arbre 9 de la machine 7 est susceptible d'être lié sélectivement soit à la couronne 20, soit au premier planétaire 17. A cet effet, le dispositif 1 comporte un crabot C2 associable à un pignon fou 31 et un crabot C3 associable à un pignon fou 32.

. Le pignon fou 31 et la couronne 20 forment un engrenage de rapport de démultiplication r2. Le pignon fou 32 et la roue 45 forment un engrenage de rapport de démultiplication r3.

. Dans le mode de fonctionnement de type sortie couplée (SC), le crabot C2 entre en coopération avec le pignon 31, tandis que le crabot C3 est désengagé du pignon 32. Les équations en régime Wa, Wb des rotors des machines 6, 7 s'écrivent alors :

$$Wa = 1 / (\mu 0 . q1) . Wsort - 1/ q2 . Wmth \qquad (13)$$

$$Wb = 1 / (\mu 0 . r2) . Wsort \qquad (14)$$

. Dans ce mode, le régime Wa du rotor 6.1 de la machine 6 dépend du régime des arbres d'entrée 2 et de sortie 4 ; et le régime Wb de la machine 7 est proportionnel à celui de l'arbre de sortie 4 (des roues du véhicules).

. En mode combiné, le crabot C3 entre en coopération avec le pignon 32, tandis que le crabot C2 est désengagé du pignon 31. Les équations en régime Wa, Wb des rotors des machines 6, 7 s'écrivent alors :

$$Wa = 1 / (\mu0 . q1) . Wsort - 1 /q2 . Wmth \qquad (15)$$

$$Wb = -R2 / (\mu0 . r3) . Wsort + (R2+1) / r3 . Wmth \qquad (16)$$

. Dans ce mode, les régimes des rotors des machines 6, 7 dépendent des régimes des arbres d'entrée 2 et de sortie 4.

. Les démultiplications q1 et q2 sont identiques à celles calculées précédemment et valent respectivement :

$$q1 = -r1 / R1 \qquad (17)$$

$$q2 = -r1 / (R1 + 1) \qquad (18)$$

D'après les valeurs r1 et R1 indiquées précédemment, q1=-0.26 et q2=-0.50.

. Comme pour l'architecture de la figure 6a, le changement de mode est effectué lorsque l'arbre 9 et les pignons 31 et 32 présentent sensiblement la même vitesse de rotation.

. Le déplacement des crabots est effectué de manière classique à l'aide de fourchettes.

## Revendications

1. Dispositif (1.1) de transmission de puissance comprenant un arbre (2) d'entrée destiné à être relié à un moteur (3) thermique et un arbre (4) de sortie destiné à être relié à un arbre de roues (5), ce dispositif (1.1) comportant en outre :

   - une première et une deuxième machines électriques (6, 7) comportant respectivement un stator (6.2, 7.2) et un rotor (6.1, 7.1), chaque machine (6,7) étant munie respectivement d'un arbre (8, 9), et
   - un ensemble mécanique (12) assurant la liaison mécanique entre l'arbre d'entrée (2), l'arbre de sortie (4) et les arbres (8, 9) des machines (6, 7),
   - au moins une des machines électriques (6, 7) comportant un rotor (6.1) et un stator (6.2) tournants reliés à l'ensemble mécanique (12) et le dispositif comportant en outre
   - un dispositif de commutation (C2, C3, C4, C5) monté sur l'arbre d'une des machines électriques, ce dispositif de commutation (C2, C3, C4, C5) permettant de lier sélectivement l'arbre (8, 9) de la machine (6, 7) à deux éléments différents de l'ensemble mécanique (12) pour assurer un changement de mode de fonctionnement du dispositif de transmission de puissance,

   **caractérisé en ce que** :

   - le régime de la machine électrique (6, 7) portant le dispositif de commutation est proportionnel exclusivement au régime des roues (5) ou du moteur (3) lorsque l'arbre de ladite machine (6, 7) est lié à un des deux éléments de l'ensemble mécanique (12), et
   - le régime de la machine électrique (6, 7) portant le dispositif de commutation dépend du régime des roues (5) et du moteur (3) lorsque l'arbre de la machine (6, 7) est lié à l'autre élément de l'ensemble mécanique (12).

2. Dispositif selon la revendication 1, **caractérisé en ce que** les deux machines (6, 7) électriques étant à stator tournant, l'ensemble mécanique (12) est dépourvu de train épicycloïdal.

3. Dispositif selon la revendication 1, **caractérisé en ce que** une des machines (6) étant à stator tournant et l'autre (7) à stator fixe, l'ensemble mécanique (12) comporte uniquement un train épicycloïdal (14.1) formé par un planétaire (17), un porte-satellites (19) portant des satellites (19.1) et une couronne (20) qui engrènent entre eux.

4. Dispositif selon la revendication 3, **caractérisé en ce que** l'arbre d'entrée (2) est lié directement au porte-satellites (19) et l'arbre de sortie (4) est lié à un arbre intermédiaire (4.1) via une descente de pont (25) de rapport μ1, cet arbre intermédiaire (4.1) étant relié à la couronne (20) via un engrenage de rapport μ0.

5. Dispositif selon la revendication 3 ou 4, **caractérisé en ce que** l'arbre (9) de la machine (7) à stator fixe est susceptible d'être lié sélectivement à la couronne (20) via un engrenage de rapport r2 ou au planétaire (17) via un engrenage de rapport r3.

6. Dispositif selon l'une des revendications 3 à 5, **caractérisé en ce que** le stator (6.2) de la machine (6) à stator tournant est lié à l'arbre d'entrée (2) via un engrenage de rapport q2, et le rotor (6.1) de la machine à stator tournant est relié au planétaire (17) via un engrenage de rapport q1.

7. Dispositif selon les revendications 4, 5 et 6, **caractérisé en ce que** μ0=-0.15 ; μ1=-1.65 ; r2=-0.25 ; r3=-0.89 ; q1=-0.26 ; q2=-0.50.

8. Dispositif selon la revendication 2, **caractérisé en ce que** l'arbre de sortie (4) est lié à un arbre intermédiaire (4.1) via une descente de pont (25) de rapport μ1, cet arbre intermédiaire (4.1) étant lui-même lié à l'arbre d'entrée (2) via un engrenage de rapport μ0.

9. Dispositif selon la revendication 2 ou 8, **caractérisé en ce que** le rotor de la première machine (6) est lié aux roues (5) via un engrenage de rapport q1, et le stator de cette machine (6) est lié à l'arbre 2 d'entrée via un engrenage de rapport q2.

10. Dispositif selon l'une des revendications 2, 8 ou 9, **caractérisé en ce que** le rotor de la deuxième machine (7) est susceptible d'être lié sélectivement à l'arbre de sortie (4) via un engrenage de rapport r2 ou via un engrenage de rapport q3, respectivement au moyen d'un premier crabot (C2) et d'un deuxième crabot (C3), et

- le stator de cette deuxième machine (7) étant susceptible d'être lié sélectivement à l'arbre d'entrée (2) via un engrenage de rapport q4 ou au bâti fixe (55) respectivement au moyen d'un troisième crabot (C4) et d'un quatrième crabot (C5).

11. Dispositif selon les revendications 2, 8, 9 et 10, **caractérisé en ce que** μ0=-0.15 ; μ1=-1.65 ; r2=-0.25 ; r3=-0.89 ; q1=-0.26 ; q2=-0.50 ; q3=0.49 ; q4=0.32.

12. Utilisation du dispositif selon la revendication 10, **caractérisée en ce que** :

- dans un mode de fonctionnement de type sortie couplée, on ferme les premier (C2) et quatrième (C5) crabots, et on ouvre les deuxième (C3) et troisième (C4) crabots, et
- dans un mode combiné, on ferme les deuxième (C3) et troisième (C4) crabots; et on ouvre les premiers (C2) et quatrième (C5) crabots.

13. Utilisation selon la revendication 12, **caractérisée en ce que** pour passer du mode sortie couplé au mode combiné, on désengage le premier crabot (C2) tout en conservant le quatrième crabot (C5) engagé, on synchronise le régime du rotor de la deuxième machine (7) avec un pignon fou (32) associable au deuxième crabot (C3), puis on engage ce deuxième crabot (C3), on désengage le quatrième crabot (C5), on synchronise le régime du stator de la machine (7) avec le pignon (57) associable au crabot (C4) et on engage le crabot (C4) avec ce pignon (57).

14. Utilisation selon la revendication 12 ou 13, **caractérisée en ce que** pour passer du mode combiné au mode sortie couplée, on désengage le troisième crabot (C4) et on arrête le stator de la deuxième machine (7) de manière à engager le quatrième crabot (C5) avec le pignon (55) auquel il est associé, et on ouvre le deuxième crabot (C3), on synchronise le rotor de la deuxième machine (7) avec le pignon (31) associable au premier crabot (C2) et on engage le premier crabot (C2) avec ce pignon (31).

**Claims**

1. A power transmission device (1.1) comprising an input shaft (2) intended to be connected to a thermal engine (3) and an output shaft (4) intended to be connected to a wheel shaft (5), this device (1.1) further comprising:

- a first and a second electric machine (6, 7) comprising respectively a stator (6.2, 7.2) and a rotor (6.1, 7.1), each machine (6, 7) being provided respectively with a shaft (8, 9), and
- a mechanical assembly (12) ensuring the mechanical connection between the input shaft (2), the output shaft (4) and the shafts (8, 9) of the machines (6, 7),
- at least one of the electric machines (6, 7) comprising a rotating rotor (6.1) and a rotating stator (6.2) connected to the mechanical assembly (12) and the device further comprising
- a switching device (C2, C3, C4, C5) mounted on the shaft of one of the electric machines, this switching device (C2, C3, C4, C5) permitting the shaft (8, 9) of the machine (6, 7) to be connected selectively to two different elements of the mechanical assembly (12) to ensure a change of operating mode of the power transmission device,

**characterized in that**:

- the speed of the electric machine (6, 7) carrying the switching device is proportional solely to the speed of the wheels (5) or of the engine (3) when the shaft of the said machine (6, 7) is connected to one of the two elements of the mechanical assembly (12), and
- the speed of the electric machine (6, 7) carrying the switching device depends on the speed of the wheels (5) and of the engine (3) when the shaft of the machine (6, 7) is connected to the other element of the mechanical assembly (12).

2. The device according to Claim 1, **characterized in that**, the two electric machines (6, 7) having rotating stators, the mechanical assembly (12) is without a planetary gear train.

3. The device according to Claim 1, **characterized in that**, one of the machines (6) having a rotating stator and the other (7) having a fixed stator, the mechanical assembly (12) comprises solely one planetary gear (14.1) formed by a sun-gear (17), a planet carrier (19) carrying planet gears (19.1) and a ring gear (20) which mesh with one another.

4. The device according to Claim 3, **characterized in that** the input shaft (2) is connected directly to the planet carrier (19) and the output shaft (4) is connected to an intermediate shaft (4.1) via a differential (25) with a ratio of $\mu 1$, this intermediate shaft (4.1) being connected to the ring gear (20) via a gear assembly with a ratio of $\mu 0$.

5. The device according to Claim 3 or 4, **characterized in that** the shaft (9) of the machine (7) with a fixed stator is able to be connected selectively to the ring gear (20) via a gear assembly with a ratio of r2 or to the sun gear (17) via a gear assembly with a ratio of r3.

6. The device according to one of Claims 3 to 5, **characterized in that** the stator (6.2) of the machine (6) with a rotating stator is connected to the input shaft (2) via a gear assembly with a ratio of q2, and the rotor (6.1) of the machine with a rotating stator is connected to the sun gear (17) via a gear assembly with a ratio of q1.

7. The device according to Claims 4, 5 and 6, **characterized in that** $\mu 0$=-0.15; $\mu 1$=-1.65; r2=-0.25; r3=-0.89; q1=-0.26; q2=-0.50.

8. The device according to Claim 2, **characterized in that** the output shaft (4) is connected to an intermediate shaft (4.1) via a differential (25) with a ratio of $\mu 1$, this intermediate shaft (4.1) being itself connected to the input shaft (2) via a gear assembly with a ratio of $\mu 0$.

9. The device according to Claim 2 or 8, **characterized in that** the rotor of the first machine (6) is connected to the wheels (5) via a gear assembly with a ratio of q1, and the stator of this machine (6) is connected to the input shaft (2) via a gear assembly with a ratio of q2.

10. The device according to one of Claims 2, 8 or 9, **characterized in that** the rotor of the second machine (7) is able to be connected selectively to the output shaft (4) via a gear assembly with a ratio of r2 or via a gear assembly with a ratio of q3, respectively by means of a first dog clutch (C2) and of a second dog clutch (C3), and

- the stator of this second machine (7) being able to be connected selectively to the input shaft (2) via a gear assembly with a ratio of q4 or to the fixed frame (55) respectively by means of a third dog clutch (C4) and of a fourth dog clutch (C5).

11. The device according to Claims 2, 8, 9 and 10, **characterized in that** $\mu0$=-0.15; $\mu1$=-1.65; r2=-0.25; r3=-0.89; q1=-0.26; q2=-0.50; q3=0.49; q4=0.32.

12. A use of the device according to Claim 10, **characterized in that**:

   - in a mode of operation of the coupled output type, the first (C2) and fourth (C5) dog clutches are closed, and the second (C3) and third (C4) dog clutches are opened, and
   - in a combined mode, the second (C3) and third (C4) dog clutches are closed; and the first (C2) and fourth (C5) dog clutches are opened.

13. The use according to Claim 12, **characterized in that** to pass from the coupled output mode to the combined mode, the first dog clutch (C2) is disengaged whilst keeping the fourth dog clutch (C5) engaged, the speed of the rotor of the second machine (7) is synchronized with an idling gear (32) which is able to be associated with the second dog clutch (C3), then this second dog clutch (C3) is engaged, the fourth dog clutch (C5) is disengaged, the speed of the stator of the machine (7) is synchronized with the gear (57) which is able to be associated with the dog clutch (C4) and the dog clutch (C4) is engaged with this gear (57).

14. The use according to Claim 12 or 13, **characterized in that** to pass from the combined mode to the coupled output mode, the third dog clutch (C4) is disengaged and the stator of the second machine (7) is stopped so as to engage the fourth dog clutch (C5) with the gear (55) with which it is associated, and the second dog clutch (C3) is opened, the rotor of the second machine (7) is synchronized with the gear (31) which is able to be associated with the first dog clutch (C2) and the first dog clutch (C2) is engaged with this gear (31).

**Patentansprüche**

1. Vorrichtung (1.1) zur Leistungsübertragung, die eine Eingangswelle (2) aufweist, die dazu bestimmt ist, mit einem Verbrennungsmotor (3) verbunden zu werden, und eine Ausgangswelle (4), die dazu bestimmt ist, mit einer Radwelle (5) verbunden zu werden, wobei diese Vorrichtung (1.1) ferner Folgendes aufweist:

   - eine erste und eine zweite elektrische Maschine (6, 7), die jeweils einen Stator (6.2, 7.2) und einen Rotor (6.1, 7.1) aufweisen, wobei jede Maschine (6, 7) jeweils mit einer Welle (8, 9) versehen ist, und
   - eine mechanische Baugruppe (12), die die mechanische Verbindung zwischen der Eingangswelle (2), der Ausgangswelle (4) und den Wellen (8, 9) der Maschinen (6, 7) sicherstellt,
   - wobei mindestens eine der elektrischen Maschinen (6, 7) einen drehenden Rotor (6.1) und einen drehenden Stator (6.2) aufweist, die mit der mechanischen Baugruppe (12) verbunden sind, und wobei die Vorrichtung ferner Folgendes aufweist
   - eine Umschaltvorrichtung (C2, C3, C4, C5), die auf die Welle einer der elektrischen Maschinen montiert ist, wobei es diese Umschaltvorrichtung (C2, C3, C4, C5) erlaubt, selektiv die Welle (8, 9) der Maschine (6, 7) mit zwei unterschiedlichen Elementen der mechanischen Baugruppe (12) zu verbinden, um einen Wechsel der Betriebsart der Leistungsübertragungsvorrichtung sicherzustellen,

   **dadurch gekennzeichnet, dass**:

   - die Drehzahl der elektrischen Maschine (6, 7), die die Umschaltvorrichtung trägt, ausschließlich zu der Drehzahl der Räder (5) oder des Motors (3) proportional ist, wenn die Welle der Maschine (6, 7) mit einem der zwei Elemente der mechanischen Baugruppe (12) verbunden ist, und
   - die Drehzahl der elektrischen Maschine (6, 7), die die Umschaltvorrichtung trägt, von der Drehzahl der Räder (5) und des Motors (3) abhängt, wenn die Welle der Maschine (6, 7) mit einem anderen Element der mechanischen Baugruppe (12) verbunden ist.

2. Vorrichtung nach Anspruch 1, **dadurch gekennzeichnet, dass**, da die zwei elektrischen Maschinen (6, 7) einen drehenden Stator haben, die mechanische Baugruppe (12) keinen Planetengetriebezug aufweist.

3. Vorrichtung nach Anspruch 1, **dadurch gekennzeichnet, dass**, da eine der Maschinen (6) einen drehenden Stator hat und die andere (7) einen stationären Stator, die mechanische Baugruppe (12) nur einen Planetengetriebezug (14.1) aufweist, der von einem Zentralrad (17), einem Planetenradträger (19), der Satellitenräder (19.1) trägt, und aus einem Zahnkranz (20), die untereinander eingreifen, ausgebildet ist.

**4.** Vorrichtung nach Anspruch 3, **dadurch gekennzeichnet, dass** die Eingangswelle (2) direkt mit dem Planetenradträger (19) verbunden ist, und die Ausgangswelle (4) mit einer Zwischenwelle (4.1) über eine Brückenabsenkung (25) mit dem Verhältnis $\mu1$ verbunden ist, wobei diese Zwischenwelle (4.1) mit dem Zahnkranz (20) über ein Radgetriebe mit dem Verhältnis $\mu0$ verbunden ist.

**5.** Vorrichtung nach Anspruch 3 oder 4, **dadurch gekennzeichnet, dass** die Welle (9) der Maschine (7) mit stationärem Stator selektiv mit dem Zahnkranz (20) über ein Radgetriebe mit dem Verhältnis r2 oder mit dem Zentralrad (17) über ein Radgetriebe mit dem Verhältnis r3 verbunden werden kann.

**6.** Vorrichtung nach einem der Ansprüche 3 bis 5, **dadurch gekennzeichnet, dass** der Stator (6.2) der Maschine (6) mit drehendem Stator mit der Eingangswelle (2) über ein Radgetriebe mit dem Verhältnis q2 und der Rotor (6.1) der Maschine mit drehendem Stator mit dem Zentralrad (17) über ein Radgetriebe mit dem Verhältnis q1 verbunden ist.

**7.** Vorrichtung nach den Ansprüchen 4, 5 und 6, **dadurch gekennzeichnet, dass** $\mu0$= -0,15; $\mu1$ = -1,65; r2 = 0,25; r3 = -0,89; q1 = -0,26; q2 = -0,50.

**8.** Vorrichtung nach Anspruch 2, **dadurch gekennzeichnet, dass** die Ausgangswelle (4) mit einer Zwischenwelle (4.1) über eine Brückenabsenkung (25) mit dem Verhältnis $\mu1$ verbunden ist, wobei diese Zwischenwelle (4.1) selbst mit der Eingangswelle (2) über ein Radgetriebe mit dem Verhältnis $\mu0$ verbunden ist.

**9.** Vorrichtung nach Anspruch 2 oder 8, **dadurch gekennzeichnet, dass** der Rotor der ersten Maschine (6) mit den Rädern (5) über ein Radgetriebe mit dem Verhältnis q1 verbunden ist, und dass der Stator dieser Maschine (6) mit der Eingangswelle (2) über ein Radgetriebe mit dem Verhältnis q2 verbunden ist.

**10.** Vorrichtung nach einem der Ansprüche 2, 8 oder 9, **dadurch gekennzeichnet, dass** der Rotor der zweiten Maschine (7) selektiv mit der Ausgangswelle (4) über ein Radgetriebe mit dem Verhältnis r2 oder über eine Radgetriebe mit dem Verhältnis q3 jeweils mittels einer ersten Klaue (C2) und einer zweiten Klaue (C3) verbunden werden kann, und

- dass der Stator dieser zweiten Maschine (7) selektiv mit der Eingangswelle (2) über ein Radgetriebe mit dem Verhältnis q4 oder mit dem stationären Rahmen (55) jeweils mittels einer dritten Klaue (C4) und einer vierten Klaue (C5) verbunden werden kann.

**11.** Vorrichtung nach den Ansprüchen 2, 8, 9 und 10, **dadurch gekennzeichnet, dass** $\mu0$ = -0,15; $\mu1$ = -1,65; r2 = 0,25; r3 = -0,89; q1 = -0,26; q2 = -0,50; q3 = 0,49; q4 = 0,32.

**12.** Gebrauch einer Vorrichtung nach Anspruch 10, **dadurch gekennzeichnet, dass**:

- man bei einer Betriebsart des Typs gekoppelter Ausgang die erste (C2) und vierte (C5) Klaue schließt und die zweite (C3) und dritte (C4) Klaue öffnet, und
- man bei einer kombinierten Betriebsart die zweite (C3) und dritte (C4) Klaue schließt und man die erste (C2) und die vierte (C5) Klaue öffnet.

**13.** Gebrauch nach Anspruch 12, **dadurch gekennzeichnet, dass** man, um von der Betriebsart mit gekoppeltem Ausgang zu der kombinierten Betriebsart überzugehen, die erste Klaue (C2) ausrückt und gleichzeitig die vierte Klaue (C5) eingerückt lässt, man die Drehzahl des Rotors der zweiten Maschine (7) mit einem Freilaufrad (32), das der zweiten Klaue (C3) zugewiesen werden kann, synchronisiert, dass dann man diese zweite Klaue (C3) einrückt und die vierte Klaue (C5) ausrückt, man die Drehzahl des Stators der Maschine (7) mit dem der Klaue (C4) zuweisbaren Ritzel (57) synchronisiert, und man die Klaue (C4) mit diesem Ritzel (57) einrückt.

**14.** Gebrauch nach Anspruch 12 oder 13, **dadurch gekennzeichnet, dass** man zum Übergehen von der kombinierten Betriebsart auf die Betriebsart mit gekoppeltem Ausgang die dritte Klaue (C4) ausrückt und den Stator der zweiten Maschine (7) derart stoppt, dass die vierte Klaue (C5) mit dem Ritzel (55), zu dem sie gehört, einrückt, und man die zweite Klaue (C3) öffnet und den Rotor der zweiten Maschine (7) mit dem Ritzel (31), das der ersten Klaue (C2) zugewiesen werden kann, synchronisiert und man die erste Klaue (C2) mit diesem Ritzel (31) einrückt.

**Fig. 1**

**Fig. 2a**

**Fig. 2b**

**Fig. 2c**

ETAT DE LA TECHNIQUE

# Fig. 3a

ETAT DE LA TECHNIQUE

# Fig. 3b

# Fig. 4a

# Fig. 4b

# Fig. 4c

**Fig. 5a**

**Fig. 5b**

-1-

ETAT DE LA TECHNIQUE

**Fig. 6a**

**Fig. 6b**

**Fig. 6c**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2832357 A
- FR 2883515

- EP 1092581 A